# EUROPÄISCHE PATENTSCHRIFT

(11) **EP 1 288 558 B1**
(45) Veröffentlichungstag und Bekanntmachung des Hinweises auf die Patenterteilung: **02.01.2004**
(21) Anmeldenummer: 02017591.5
(22) Anmeldetag: 07.08.2002
(51) Int. Cl.: F16L 59/14, F16L 9/06, F16L 11/15, F16L 59/153, B29C 44/00

(54) **Wärmeisoliertes Leitungsrohr**
Insulated pipe
Tuyau isolé

(30) Priorität: 31.08.2001 DE 10142719
(43) Veröffentlichungstag der Anmeldung: 05.03.2003
(73) Patentinhaber: BRUGG Rohrsysteme GmbH, D-31515 Wunstorf (DE)
(72) Erfinder: Homann, Jörn, Dipl.-Ing., 30655 Hannover (DE); Keine, Bodo, 31553 Auhagen (DE)

(56) Entgegenhaltungen:
- EP-A- 0 634 602
- EP-A- 0 892 207
- DE-U- 29 615 423
- US-A- 3 979 818
- US-A- 4 094 715
- US-A- 4 351 366
- US-A- 4 438 056

## Beschreibung

Die Erfindung betrifft ein wärmeisoliertes Leitungsrohr nach dem Oberbegriff des Anspruchs 1 sowie ein Verfahren zur Herstellung eines wärmeisolierten Leitungsrohres nach dem Oberbegriff des Anspruchs 5.

Aus der CH-PS 451 621 ist ein flexibles wärmeisoliertes Leitungsrohr bekannt, welches aus einem gewellten metallischen Innenrohr, einem konzentrisch und im Abstand dazu angeordneten gewellten metallischen Außenrohr, und einer zwischen dem Innenrohr und dem Außenrohr befindlichen Wärmedämmschicht aus Polyurethanschaum besteht. Auf dem Außenrohr ist noch ein Kunststoffaußenmantel vorgesehen.

Dieses bekannte Leitungsrohr hat sich für den Transport von Fernwärme bestens bewährt. Das Leitungsrohr kann in Längen bis zu 1.000 m auf Kabeltrommeln transportiert und wie ein elektrisches Kabel in einem Stück ohne Verbindungsstücke verlegt werden.

Aus dem Deutschen Gebrauchsmuster 94 07 409 ist ein wärmeisoliertes Leitungsrohr bekannt, welches auf der Rohrkonstruktion nach der CH-PS 451 621 aufbaut. An die Stelle des gewellten metallischen Außenrohres tritt hier eine Hülle aus Streckmetall, auf welche eine diffusionsdichte Folie aufgebracht ist. Die diffusionsdichte Folie kann eine Metallfolie oder Kunststoffolie sein. Die Folie dient als Formbegrenzung für den den Ringraum zwischen dem Innenrohr und dem Außenrohr ausfüllenden Schaumstoff. Darüber hinaus dient die Folie als Dampf- bzw. Diffusionssperre.

Der Vorteil dieses Leitungsrohres gegenüber dem Leitungsrohr nach der CH-PS 451 621 besteht darin, daß eine erhebliche Gewichtseinsparung bei nahezu gleichbleibenden mechanischen Eigenschaften erzielt wird.

Beide Rohrkonstruktionen haben den Nachteil, daß der Kunststoffmantel eine glatte Oberfläche aufweist und von daher die Biegbarkeit des Leitungsrohres einschränkt.

Der vorliegenden Erfindung liegt von daher die Aufgabe zugrunde, das die Gattung bildende Leitungsrohr dahingehend zu verbessern, daß dieses eine verbesserte Biegbarkeit aufweist.

Diese Aufgabe wird durch die im Kennzeichen des Anspruchs 1 erfaßten Merkmale gelöst.

Der wesentliche Vorteil der Erfindung ist darin zu sehen, daß der sich im Ringspalt zwischen den Innenrohr und der Hülle aus Streckmetall bzw. der die Streckmetallhülle umgebenden Folie entwickelnde Schaum durch die Maschen des Streckmetalls hindurch dringt und zwischen den Windungen des schraubenlinienförmig aufgebrachten Strangs befindlichen Bereiche der Folie nach außen aufwölbt. Die Hülle aus Streckmetall ist somit vollständig in dem Schaum eingebettet. Durch die Aufwölbung ergibt sich eine schraubenlinienförmige Wellung. Der anschließend aufextrudierte Außenmantel füllt die Wellentäler aus, so daß sich eine schraubenlinienförmige Wellenkontur des Kunststoffaußenmantels ergibt.

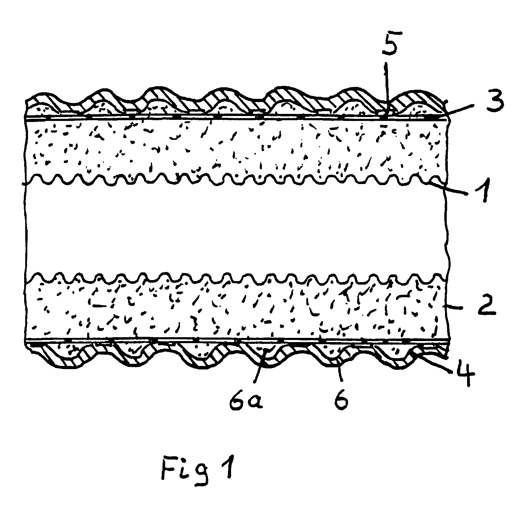

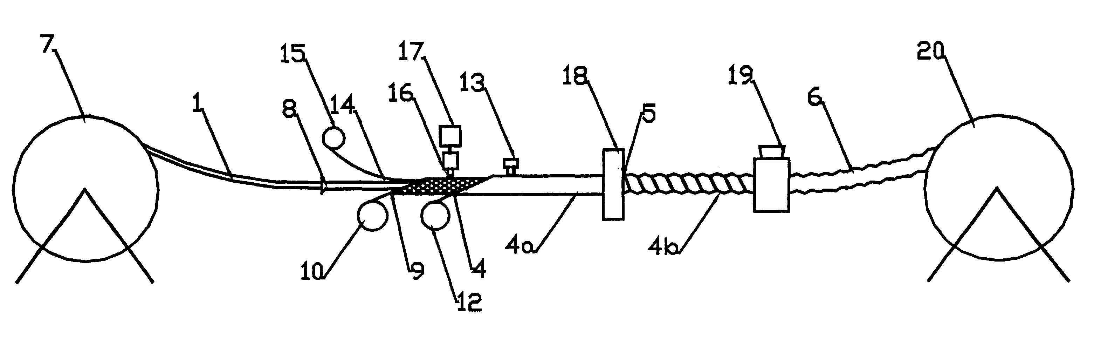

Die Erfindung ist anhand der in den Figuren 1 und 2 schematisch dargestellten Ausführungsbeispiele näher erläutert.

In Figur 1 ist ein seitlicher Schnitt durch ein erfindungsgemäßes Leitungsrohr dargestellt.

Das Leitungsrohr besteht aus einem Innenrohr 1, vorzugsweise einem längsnahtgeschweißten, gewellten Metallrohr, vorzugsweise aus rostfreiem Stahl, einer Wärmedämmschicht 2 aus einem Schaumstoff auf der Basis von Polyurethan, oder Polyisocyanurat einer konzentrisch zum Innenrohr 1 geformten rohrförmigen Lage 3 aus einem Streckmetallband, einer Kunststoffolie 4 vorzugsweise einer Verbundfolie aus Polyethylenterephthalat und Polyethylen niederer Dichte (LDPE), einem schmalen schraubenlinienförmig mit Abstand der einzelnen Windungen aufgebrachten Kunststoffband 5, vorzugsweise eine 3-fache Verbundfolie aus Polyethylen-Polyethylenterephthalat-Polyetylen sowie einem Kunststoffaußenmantel 6, vorzugsweise aus Polyethylen. Die Kunststoffolie kann metallisiert oder mit einer Siliziumoxidschicht versehen sein. Hierdurch wird die Diffusionsdichtigkeit der Rohrkonstruktion verbessert.

Die Kunststoffolie 4 weist einen schraubenlinienförmigen wellenförmigen Verlauf auf, wobei die Wellentäler dadurch erzeugt sind, daß das Kunststoffband 5 die Kunststoffolie 4 niederhält. Die Bereiche 6a zwischen zwei Wellentälern sind mit Schaumstoff ausgefüllt. Der Kunststoffaußenmantel 6 folgt dem Verlauf der Kunststoffolie und weist somit eine schraubenlinienförmig verlaufende Wellung an, durch welche die Biegbarkeit des Leitungsrohres gegenüber einem Leitungsrohr gleichen Aufbaus mit glattem Kunststoffaußenmantel verbessert wird.

In der Figur 2 ist der Verfahrensablauf zur Herstellung des wärmeisolierten Leitungsrohres dargestellt.

Von einer Vorratstrommel 7 wird das Innenrohr 1 abgezogen und in ein Führungsrohr 8 eingeführt. Ein Band 9 aus Streckmetall wird von einer Vorratsspule 10 abgezogen und zu einem Rohr 11 um das Innenrohr 1 und im Abstand zu diesem geformt. Um dieses Rohr 11 aus Streckmetall wird die Kunststoffolie 4, die von einer Vorratsspule 12 abgezogen wird, lose herumgeformt und mittels einer Schweißvorrichtung 13 an ihren Längskanten verschweißt.

In den Ringspalt zwischen dem Innenrohr 1 und dem Rohr 11 aus Streckmetall werden ein oder mehrere Fühler- und Meldeadern 14 eingebracht, welche in dem Leitungsrohr eingedrungene Feuchtigkeit melden und orten sollen. Mit 15 ist die Vorratsspule für die Fühler- und Meldeadern 14 bezeichnet.

Über eine Mischeinrichtung 16 wird aus einem Vorratsbehälter 17 ein aufschäumbares Gemisch aus Polyol und Isocyanat in den Ringspalt zwischen dem Innenrohr 1 und dem Rohr 11 aus Streckmetall eingeblasen. Das Schaumgemisch ist so eingestellt, daß das Gemisch hinter der Schweißeinrichtung 13 aufzuschäumen beginnt. Der sich entwickelnde Schaum dringt dabei durch die Öffnungen des Streckmetalls und füllt den geringen Spalt zwischen dem Rohr 11 aus Streckmetall und dem Rohr 4a aus der Kunststoffolie 4 aus.

Mittels eines Bandspinners 18 wird ein Kunststoffband 5 wendelartig auf das Rohr 4a aufgebracht, wodurch die Bereiche des Rohres 4a, in welchen das Kunststoffband 5 umläuft, auf das Rohr 1 aus Streckmetall aufgelegt werden.

Der Schaum wird nun so eingestellt, daß er das Rohr 4a vollständig ausfüllt, bevor das Kunststoffband 5 aufgewickelt wird. In diesem Fall wird der noch weiche Schaum durch das Kunststoffband 5 verdrängt, so daß sich eine schraubenlinienförmig verlaufende Wellung des Rohres 4a (siehe 4b) ergibt.

Alternativ kann der Schaum auch so eingestellt werden, daß er nach dem Aufwickeln des Kunststoffbandes 5 aufschäumt, und dabei die Bereiche zwischen den einzelnen Windungen des Kunststoffbandes 5 nach außen wölbt und auf diese Weise das gewellte Rohr 4b herstellt.

Das gewellte Rohr 4b läuft dann in einen Extruder 19 ein, mit welchem der Außenmantel 6 aufgebracht wird und zwar so, daß er der Wellung des Rohres 4b folgt.

Das Leitungsrohr wird dann auf eine Kabeltrommel 20 aufgewickelt.

Mit Hilfe des dargestellten Verfahrens können wärmeisolierte Leitungsrohre in kontinuierlicher Arbeitsweise in großer Länge hergestellt werden, die auf Kabeltrommeln an den Verlegeort gebracht und dort in Längen von bis zu 1000 m in einem Stück, d. h. ohne Verbindungsmuffen verlegt werden können.

## Patentansprüche

1. Wärmeisoliertes Leitungsrohr, bestehend aus zumindest einem mediumführenden Innenrohr (1), einer das oder die Innenrohre (1) umgebenden Wärmedämmschicht (2) aus einem aufgeschäumten Kunststoff, einer die Wärmedämmschicht (2) umgebenden metallischen Hülle (3), sowie einem Außenmantel aus Kunststoff, wobei die metallische Hülle (3) aus Streckmetall besteht, und auf der metallischen Hülle (3) eine Kunststoffolie (4) aufliegt, **dadurch gekennzeichnet, daß** die Folie (4) eine in der Wärme verformbare Kunststoffolie (4) ist, daß auf der Kunststoffolie (4) ein Strang (5) in Form einer Schraubenlinie aufliegt, daß die Kunststoffolie (4) zwischen den Windungen des Strangs (5) durch den aufschäumenden Kunststoff nach außen aufgewölbt ist und daß der Außenmantel (6) den Bereich (6a) zwischen den Aufwölbungen ausfüllt, so daß die äußere Oberfläche des Außenmantels (6) eine schraubenlinienförmige Wellung aufweist.

2. Wärmeisoliertes Leitungsrohr nach Anspruch 1, **dadurch gekennzeichnet, daß** die Kunststoffolie (4) eine in Längsrichtung des Leitungsrohres verlaufende Schweiß- oder Klebenaht aufweist.

3. Wärmeisoliertes Leitungsrohr nach Anspruch 1 oder 2, **dadurch gekennzeichnet, daß** die Kunststoffolie (4) aus einem Material besteht, welches bei der Aufschäumtemperatur erweicht.

4. Wärmeisoliertes Leitungsrohr nach Anspruch 3, **dadurch gekennzeichnet, daß** die Kunststoffolie (4) eine Verbundfolie aus Polyethylenterephthalat (PETO) und Polyethylen (LDPE) ist.

5. Verfahren zur Herstellung eines wärmeisolierten Leitungsrohres, bestehend aus zumindest einem mediumführenden Innenrohr, einer das oder die Innenrohre umgebendem Wärmedämmschicht, einer auf der Wärmedämmschicht liegenden metallischen Hülle sowie einem Außenmantel aus Kunststoff, bei dem um das oder die Innenrohre eine bandförmige Bahn und die ebenfalls längseinlaufende metallische Hülle längseinlaufend in eine Rohrform gebracht werden, in das noch offene Rohr ein aufschäumbares Kunststoffgemisch eingebracht wird und nach dem Schließen der bandförmigen Bahn und der metallischen Hülle ein Außenmantel aufgebracht wird, **dadurch gekennzeichnet, daß** um das oder die Innenrohre eine metallische Hülle aus einem Streckmetall zu einem Rohr geformt wird, daß auf das Rohr aus Streckmetall eine Kunststoffolie längseinlaufend gelegt und verschweißt oder verklebt wird, daß in den Spalt zwischen dem oder den Innenrohren und der Kunststoffolie bzw. dem Rohr aus Streckmetall ein aufschäumbares Kunststoffgemisch eingebracht wird, daß auf die Kunststoffolie ein Strang schraubenlinienförmig aufgewickelt wird, daß die Kunststoffolie zwischen den Windungen des Stranges der den Druck des aufschäumenden Kunststoffes nach außen gewölbt wird und daß abschließend der Außenmantel aus thermoplastischem Kunststoff aufextrudiert wird und dabei die Bereiche zwischen den Aufwölbungen ausfüllt, so daß der Außenmantel eine schraubenlinienförmige Wellung erfährt.

6. Verfahren zur Herstellung eines wärmeisolierten Leitungsrohres, bestehend aus zumindest einem mediumführenden Innenrohr, einer das oder die Innenrohre umgebendem Wärmedämmschicht, einer auf der Wärmedämmschicht liegenden metallischen Hülle sowie einem Außenmantel aus Kunststoff, bei dem um das oder die Innenrohre eine bandförmige Bahn und die ebenfalls längseinlaufende metallische Hülle längseinlaufend in eine Rohrform gebracht werden, in das noch offene Rohr ein aufschäumbares Kunststoffgemisch eingebracht wird und nach dem Schließen der bandförmigen Bahn und der metallischen Hülle ein Außenmantel aufgebracht wird, **dadurch gekennzeichnet, daß** die Kunststoffolie durch den durch die Öffnungen des Streckmetalls hindurchtretenden Schaum aufgewölbt wird, daß auf die aufgewölbte Kunststoffolie ein Strang schraubenlinienförmig aufgewickelt wird, während der Schaum noch weich ist und dabei die Folie schraubenlinienförmig bis auf das Streckmetall herunterformt, daß abschließend der Außenmantel aus thermoplastischem Kunststoff aufextrudiert wird und dabei die Bereiche zwischen den Aufwölbungen ausfüllt, so daß der Außenmantel eine schraubenlinienförmige Wellung erfährt.

7. Verfahren nach Anspruch 5, **dadurch gekennzeichnet, daß** das oder die Innenrohre durch eine rohrförmige Hülse konzentrisch zur Kunststoffolie bzw. dem Rohr aus Streckmetall geführt werden.

## Claims

1. Heat-insulated conduit, comprising at least a medium transporting inner tube (1), a plastic foam heat-insulation layer (2) surrounding the inner tube(s) (1), a metal envelope (3) surrounding heat-insulation layer (2), and a plastic lagging, in which the metal envelope (3) is made of expanded metal, and a plastic foil (4) is located on the metal envelope (3), **characterised in that** the foil (4) is a thermoplastic foil (4), that a rope (5) in the form of a helix is located on the plastic foil (4), that the plastic foil (4) bulges outwards between the turns of the rope (5) as the result of the foaming plastic and that the lagging (6) fills the area (6a) between the outward bulges, so that the external surface of the lagging (6) has helical bulging.

2. Heat-insulated conduit in accordance with Claim No. 1, **characterised in that** the plastic foil (4) around the conduit has a longitudinal welded or glued seam.

3. Heat-insulated conduit in accordance with Claim No. 1 or 2, **characterised in that** the plastic foil (4) comprises material that softens at the foaming temperature.

4. Heat-insulated conduit in accordance with Claim No. 3, **characterised in that** the plastic foil (4) is a compound foil made of polyethylenterephthalate (PETO) and polyethylene (LDPF).

5. Procedure for the manufacture of a heat-insulated conduit, comprising at least a medium transporting inner tube, a heat-insulation layer surrounding the inner tube(s), a metal envelope surrounding the heat-insulation layer and a plastic lagging, on which a band-shaped tape and similar longitudinal metal envelope are applied longitudinally in a tubular shape around the inner tube(s), wherein a foamable plastic mixture is introduced into the still open tube and after the band-shaped tape and the metal envelope have been closed a lagging is applied, **characterised in that** an expanded-metal envelope is formed into a tube around the inner tube(s), that a plastic foil is placed longitudinally on the expanded-metal tube and is welded or glued, that a foamable plastic mixture is introduced into the gap between the inner tube(s) and the plastic foil or the expanded-metal tube, that a rope is wound helically around the plastic foil, that the plastic foil is forced to bulge outwards between the turns of the rope under the pressure of the foaming plastic and that finally the thermoplastic lagging is extruded onto it, thereby filling the areas between the bulges, so that the lagging bulges outwards helically.

6. Procedure for the manufacture of a heat-insulated conduit, comprising at least a medium transporting inner tube, a heat-insulation layer surrounding the inner tube(s), a metal envelope surrounding the heat-insulation layer and a plastic lagging, on which a band-shaped tape and similar-longitudinal metal envelope are applied longitudinally in a tubular shape around the inner tube(s), wherein a foamable plastic mixture is introduced into the still open tube and after the band-shaped tape and the metal envelope have been closed a lagging is applied, **characterised in that** the plastic foil bulges out as the result of the foam permeating through the openings of the expanded-metal tube, that a rope is wound helically around the plastic foil while the foam is still soft and pushes the foil downwards helically onto the expanded metal, that the thermoplastic lagging is then extruded onto it, thereby filling the areas between the bulges, so that the lagging bulges outwards helically.

7. Procedure in accordance with Claim No. 5, **characterised in that** the inner tube(s) is/are fed into a tubular sleeve concentrically to the plastic foil and/or the expanded-metal tube.

## Revendications

1. Tube à isolation thermique, composé d'au moins un tube intérieur conducteur de fluide (1), d'une couche d'isolation thermique (2) entourant le ou les tubes intérieurs (1) dans une matière synthétique en mousse, d'une enveloppe métallique (3) entourant la couche d'isolation thermique (2), ainsi que d'une gaine extérieure en matière synthétique, où l'enveloppe métallique (3) est réalisée dans du métal déployé et qu'un film en matière synthétique (4) repose sur l'enveloppe métallique (3),
**caractérisé par le fait que** le film (4) est un film en matière synthétique (4) déformable sous l'influence de la chaleur, qu'une enveloppe (5) de forme hélicoïdale repose sur le film en matière synthétique (4), que le film en matière synthétique (4) est bombé vers l'extérieur entre les spires de l'enveloppe (5) par la matière synthétique moussante et que la gaine extérieure (6) remplit la zone (6a) entre les bombements de telle manière que la surface extérieure de la gaine extérieure (6) présente une ondulation hélicoïdale.

2. Tube à isolation thermique selon la revendication 1, **caractérisé par le fait que** le film en matière synthétique (4) présente un cordon de collage ou de soudage dans le sens longitudinal.

3. Tube à isolation thermique selon la revendication 1 ou 2, **caractérisé par le fait que** le film en matière synthétique (4) est composé dans un matériau, lequel ramollit à la température de moussage.

4. Tube à isolation thermique selon la revendication 3, **caractérisé par le fait que** le film en matière synthétique (4) est un film composite en polyéthylène téréphthalat (PETO) et en poloyéthylène (LDPE).

5. Procédé pour la fabrication d'un tube à isolation thermique, composé d'au moins un tube intérieur conducteur de fluide, d'une couche d'isolation thermique entourant le ou les tubes intérieurs, d'une enveloppe métallique reposant sur la couche d'isolation thermique, ainsi que d'une gaine extérieure en matière synthétique, où une feuille sous forme de bande longitudinale appliquée sur le ou les tubes intérieurs ainsi que l'enveloppe métallique également longitudinale entrent dans un tube conducteur, à l'intérieur duquel est introduit dans le tube encore ouvert un mélange de matière synthétique moussant et après la fermeture de la feuille sous forme de bande et de l'enveloppe métallique une gaine extérieure est appliquée, **caractérisé par le fai**t **qu**'autour du ou des tubes intérieurs une enveloppe métallique composée de métal déployé est formée en un tube, qu'un film en matière synthétique est posé longitudinalement sur le tube en métal déployé et soudé ou collé, qu'un mélange en matière synthétique moussant est introduit dans l'interstice entre le ou les tubes intérieurs et le film en matière synthétique ou le tube en métal déployé, qu'une enveloppe est enroulée de manière hélicoïdale sur le film en matière synthétique, que le film en matière synthétique est bombé vers l'extérieur entre les spires de l'enveloppe sous la pression de la matière synthétique moussante et qu'enfin la gaine extérieure en matière synthétique thermoplastique est extrudée et remplit les zones entre les bombements de telle manière que la gaine extérieure présente une ondulation hélicoïdale.

6. Procédé pour la fabrication d'un tube à isolation thermique, composé d'au moins un tube intérieur conducteur de fluide, d'une couche d'isolation thermique entourant le ou les tubes intérieurs, d'une enveloppe métallique reposant sur la couche d'isolation thermique, ainsi que d'une gaine extérieure en matière synthétique, où une feuille sous forme de bande longitudinale appliquée sur le ou les tubes intérieurs ainsi que l'enveloppe métallique également longitudinale entrent dans un tube conducteur, à l'intérieur duquel est introduit dans le tube encore ouvert un mélange de matière synthétique moussant et après la fermeture de la feuille sous forme de bande et de l'enveloppe métallique une gaine extérieure est appliquée, **caractérisé par le fait que** le film en matière synthétique est bombé par la mousse traversant les orifices du métal déployé, qu'une enveloppe est enroulée de manière hélicoïdale sur le film en matière synthétique bombé, pendant que la mousse est encore tendre et le film est plaqué de manière hélicoïdale sur le métal déployé, qu'enfin la gaine extérieure en matière synthétique thermoplastique est extrudée et les zones entre les bombements remplies de telle manière que la gaine extérieure présente une ondulation hélicoïdale.

7. Procédé selon la revendication 5, **caractérisé par le fait que** le ou les tubes intérieurs sont guidés par une enveloppe tubulaire de manière concentrique par rapport au film en matière synthétique ou le tube en métal déployé.
